# Europäisches Patentamt

# European Patent Office

# Office européen des brevets

(11) Veröffentlichungsnummer: **0 137 520**
**B1**

(12) ## EUROPÄISCHE PATENTSCHRIFT

(45) Veröffentlichungstag der Patentschrift:
**07.01.87**

(51) Int. Cl.⁴: **B 60 D 1/00**

(21) Anmeldenummer: **84112334.2**

(22) Anmeldetag: **12.10.84**

(54) **Vorrichtung zur höhenverstellbaren Halterung einer Kupplung an einem Zugfahrzeug.**

(30) Priorität: **13.10.83 DE 8329605 U**

(43) Veröffentlichungstag der Anmeldung:
**17.04.85 Patentblatt 85/16**

(45) Bekanntmachung des Hinweises auf die Patenterteilung:
**07.01.87 Patentblatt 87/2**

(84) Benannte Vertragsstaaten:
**AT CH DE FR IT LI**

(56) Entgegenhaltungen:
**EP - A - 0 016 317**
**EP - A - 0 095 443**
**CH - A - 365 955**
**DE - A - 3 122 116**
**US - A - 3 922 006**
**US - A - 4 215 876**

(73) Patentinhaber: **Sauermann, Hans, Hohenwarter Strasse 29, D-8899 Freinhausen (DE)**

(72) Erfinder: **Sauermann, Hans, Hohenwarter Strasse 29, D-8899 Freinhausen (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Möhlstrasse 22, D-8000 München 80 (DE)**

# Beschreibung

Die Erfindung betrifft eine Vorrichtung zur höhenverstellbaren Halterung einer Kupplung an einem Zugfahrzeug nach dem Oberbegriff des Anspruchs 1.

Bei einer nach der US-A-3,922,006 bekannten Vorrichtung dieser Art befinden sich an der Befestigungsplatte zur Kupplung vorspringende Nokken, die wahlweise in Eingriff mit nach rückwärts offenen Vertiefungen in Schenkeln der U-Schienen zu bringen sind. Um die Vorsprünge in den ausgewählten Vertiefungen festzuhalten, wird ein Keil zwischen eine gemeinsame Basis der U-Schienen und die Befestigungsplatte geschlagen. Ein solcher Keil ist nicht einfach zu lösen und kann als loses Teil verlorengehen.

Aufgabe der Neuerung ist es, eine Vorrichtung eingangs genannter Art anzugeben, die ohne grossen Fertigungsaufwand herstellbar ist, robust ist und eine Verstellung ohne erheblichen Arbeitsaufwand ermöglicht.

Die Lösung dieser Aufgabe ist im Kennzeichen des Anspruchs 1 angegeben.

Durch die verdrehbare Stange kann man die Befestigungsplatte ohne Schwierigkeit vom Träger lösen, in die richtige Höhe stellen und dann wieder verriegeln.

Eine massive, besonders einfach herstellbare Ausbildung der Verriegelungsglieder und der Gegenverriegelungsglieder ist in Anspruch 2 angegeben.

Um eine glatte, satte Geradführung der Befestigungsplatte bei einer Verstellung zu erhalten, ist bevorzugt eine Ausbildung gemäss Anspruch 3 vorgesehen.

Die Verstellung wird besonders bei einer Ausbildung gemäss Anspruch 4 erleichtert.

Der Zusammenbau der Vorrichtung wird durch die Konstruktionsmerkmale des Anspruchs 5 vereinfacht.

Eine besonders glatte, satte Verschiebbarkeit und Sicherung der Befestigungsplatte ergibt sich bei Ausbildung der Neuerung gemäss Anspruch 6.

Die Neuerung wird im folgenden an einem Ausführungsbeispiel unter Hinweis auf die beigefügten Zeichnungen beschrieben.

Fig. 1 zeigt einen Träger der Vorrichtung von seiner Rückseite aus betrachtet.

Fig. 2 zeigt einen Schnitt durch den Träger nach Fig. 1 entlang der Schnittlinie II-II in Fig. 1.

Fig. 3 zeigt in vergrössertem Massstab einen Schnitt durch den Träger nach Fig. 1 in Schnittlinie III-III.

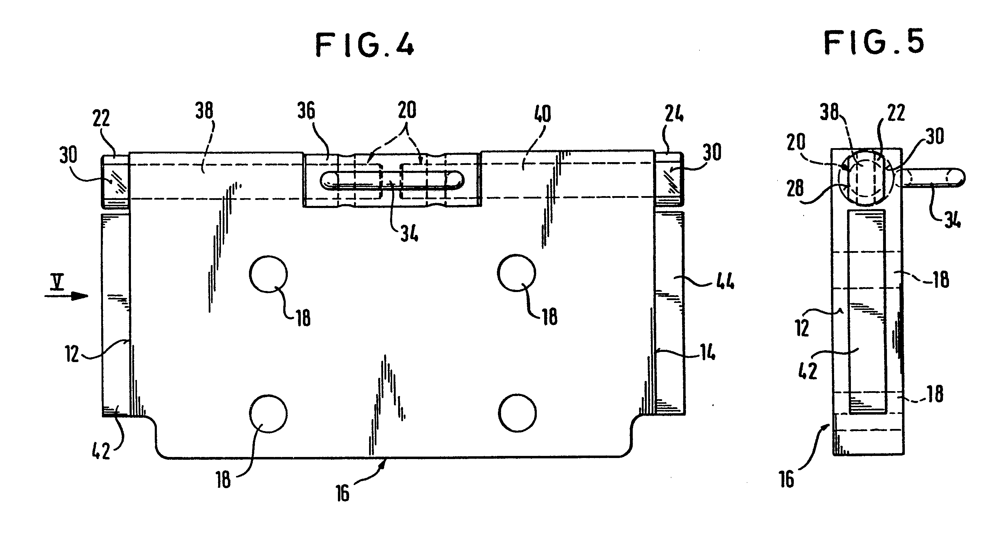

Fig. 4 zeigt eine Befestigungsplatte von ihrer Rückseite aus.

Fig. 5 zeigt eine Seitenansicht der Befestigungsplatte nach Fig. 4 in Blickrichtung V.

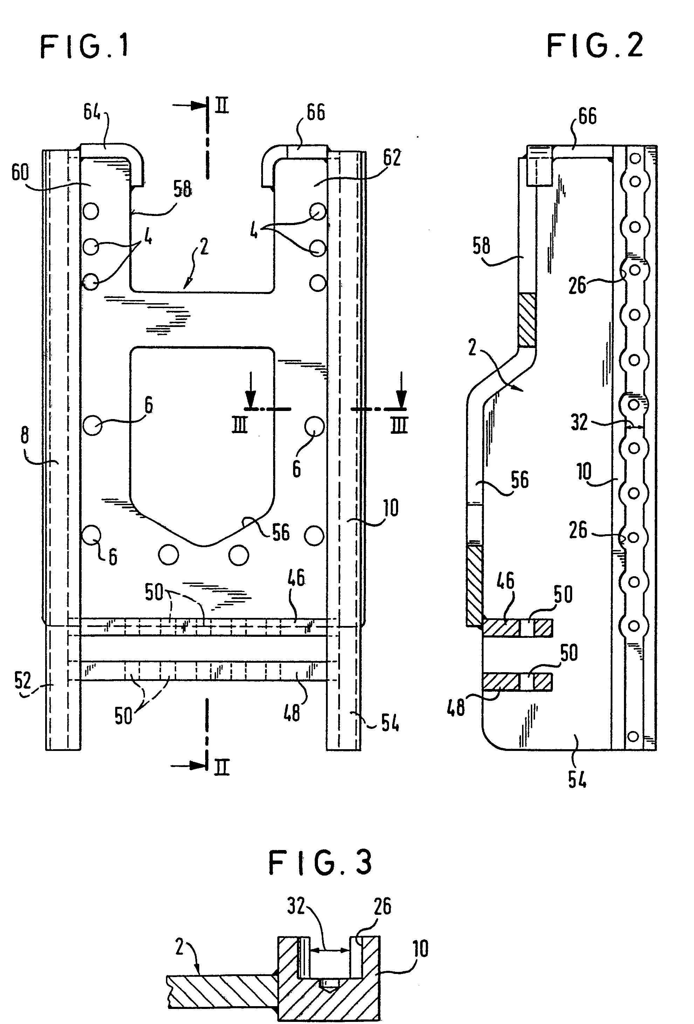

Der Träger 2 nach den Fig. 1 bis 3 weist eine Mehrzahl von Befestigungslöchern 4, 6 zur Befestigung an der Rückseite eines Zugfahrzeugs auf. An seinen Rändern ist der Träger 2 mit zwei einander zugewandten U-Schienen 8, 10 versehen. Diese U-Schienen 8, 10 können die seitlichen, vertikalen Ränder 12, 14 einer Befestigungsplatte 16 für eine Kupplung umgreifen. In der Befestigungsplatte 16 befinden sich Löcher 18 zur Befestigung einer Kupplung. Am oberen Rand der Befestigungsplatte 16 ist eine verdrehbare Stange 20 gelagert, an deren Enden sich Verriegelungsglieder 22, 24 befinden, die in Formschluss mit jeweils ausgewählten, von übereinander angeordneten Gegenverriegelungsgliedern 26 in den U-Schienen 8, 10 zu bringen sind. Die Verriegelungsglieder 22, 24 sind in diesem Fall doppelseitige Nokken und die Gegenverriegelungsglieder 26 diesen Nocken zugeordnete Ausnehmungen in den U-Schienen 8, 10.

Der Abstand zwischen den die Nocken verbindenden Seitenflanken 28, 30 der Verriegelungsglieder 22, 24 ist geringfügig kleiner als die Weite 32 der U-Schienen 8, 10 zwischen den Gegenverriegelungsgliedern 26, also im vorliegenden Fall den Ausnehmungen.

An dem Mittelbereich der Stange 20 befindet sich ein Handgriff 34. Die Stange 20 ist im übrigen durch zwei endständig die Verriegelungsglieder 22, 24 tragenden, durch eine Muffe 36 miteinander verbundene Abschnitte 38, 40 gebildet.

An ihren seitlichen, vertikalen Rändern 12, 14 weist die Befestigungsplatte 16 Stege 42, 44 auf, die in die U-Schienen 8, 10 satt eingreifen.

Auf der nach rückwärts weisenden Seite des Trägers sind übereinander zwei horizontale Schienen 46, 48 angesetzt, in denen sich vertikale Löcher 50 zum Eingängen einer Deichsel befinden. Seitlich reichen diese Schienen 46, 48 bis zu Wangen 52, 54 des Trägers 2, an deren rückwärtigen Innenrändern die U-Schienen 8, 10 angesetzt sind. Der Träger 2 ist mittig mit der Gewichtsminderung dienenden Ausnehmungen 56, 58 versehen. Die Ausnehmung 58 ist nach oben offen. Ihre seitlichen Begrenzungsschenkel 60, 62 sind mit angeschweissten Winkelstücken 64, 66 abgedeckt, die der Stabilisierung dienen.

## Patentansprüche

1. Vorrichtung zur höhenverstellbaren Halterung einer Kupplung an einem Zugfahrzeug, mit einer Befestigungsplatte (16) für die Kupplung, deren seitliche, vertikale Ränder (12, 14) in einander zugewandten U-Schienen (8, 10) an einem an dem Zugfahrzeug zu befestigenden Träger (2) geführt verschiebbar sind, gekennzeichnet durch eine an der Befestigungsplatte (16) horizontal gelagerte, verdrehbare Stange (20), an deren Enden sich Verriegelungsglieder (22, 24) befinden, die in Formschluss mit jeweils ausgewählten von übereinander angeordneten Gegenverriegelungsgliedern (26) in den U-Schienen (8, 10) zu bringen sind.

2. Vorrichtung nach Anspruch 1, dadurch gekennzeichnet, dass die Verriegelungsglieder (22, 24) doppelseitige Nocken und die Gegenverriegelungsglieder (26) diesen Nocken zugeordnete Ausnehmungen in den U-Schienen (8, 10) sind.

3. Vorrichtung nach Anspruch 2, dadurch gekennzeichnet, dass der Abstand zwischen den die Nocken verbindenden Seitenflanken (28, 30) der Verriegelungsglieder (22, 24) geringfügig kleiner als die Weite (32) der U-Schienen (8, 10) zwischen den Gegenverriegelungsgliedern (26) ist.

4. Vorrichtung nach einem der vorhergehenden Ansprüche, dadurch gekennzeichnet, dass sich an dem Mittelbereich der Stange (20) ein Handgriff (34) befindet.

5. Vorrichtung nach einem der vorhergehenden Ansprüche, dadurch gekennzeichnet, dass die Stange (20) durch zwei endständig die Verriegelungsglieder (22, 24) tragenden, durch eine Muffe (36) untereinander verbundene Abschnitte (38, 40) gebildet ist.

6. Vorrichtung nach einem der vorhergehenden Ansprüche, dadurch gekennzeichnet, dass die Befestigungsplatte (16) an ihren seitlichen Rändern (12, 14) Stege (42, 44) aufweist, die in die U-Schienen (8, 10) satt eingreifen.

## Claims

1. Device for the vertically adjustable retention of a coupling on a towing vehicle, having a securing plate (16) for the coupling, the lateral, vertical edges (12, 14) of which are displaceable under guidance in U-rails (8, 10) facing one another on a carrier (2) for securing to the towing vehicle, characterised by a rotatable rod (20) mounted horizontally on the securing plate (16), on the ends of which rod locking members (22, 24) are situated which are to be brougt into shape-locking engagement with selected ones in each case of counter-locking members (26) arranged one above the other in the U-rails (8, 10).

2. Device according to Claim 1, characterised in that the locking members (22, 24) are double-sided dogs and the counter-locking members (26) are apertures allocated to these dogs in the U-rails (8, 10).

3. Device according to Claim 2, characterised in that the distance between the side flanks (28, 30), which connect the dogs, of the locking members (22, 24) is slightly less than the width (32) of the U-rails (8, 10) between the counter-locking members (26).

4. Device according to one of the preceding Claims, characterised in that a handle (34) is situated on the middle region of the rod (20).

5. Device according to one of the preceding Claims, characterised in that the rod (20) is formed by two sections (38, 40) connected with one another by a sleeve (36) and carrying the locking members (22, 24) at the ends.

6. Device according to one of the preceding Claims, characterised in that the securing plate (16) comprises flanges (42, 44) on its lateral edges (12, 14) which engage closely in the U-rails (8, 10).

## Revendications

1. Dispositif de support d'un accouplement à un véhicule tracteur, avec faculté de réglage en hauteur, comportant une plaque de fixation (16) pour l'accouplement, dont les bords latéraux verticaux (12, 14) sont guidés à coulissement dans des rails en U (8, 10) tournés l'un vers l'autre, sur un support (2) devant être fixé au véhicule tracteur, caractérisé par une tige rotative (20) montée horizontalement sur la plaque de fixation (16) et aux extrémités de laquelle se trouvent des organes de verrouillage (22, 24) pouvant être mis en prise par concordance de formes, avec des organes respectifs sélectionnés parmi des organes de verrouillage complémentaires (26) agencés en superposition dans les rails en U (8, 10).

2. Dispositif selon la revendication 1, caractérisé par le fait que les organes de verrouillage (22, 24) sont des cames à double face, les organes de verrouillage complémentaires (26) étant des évidements associés à ces cames et pratiqués dans les rails en U (8, 10).

3. Dispositif selon la revendication 2, caractérisé par le fait que la distance entre les flancs latéraux (28, 30) reliant les cames des organes de verrouillage (22, 24) est légèrement plus petite que la largeur (32) des rails en U (8, 10) entre les organes de verrouillage complémentaires (26).

4. Dispositif selon l'une des revendications précédentes, caractérisé par le fait qu'une poignée (34) se trouve dans la région centrale de la tige (20).

5. Dispositif selon l'une des revendications précédentes, caractérisé par le fait que la tige (20) est formée par deux tronçons (38, 40) qui portent à leurs extrémités les organes de verrouillage (22, 24) et sont reliés l'un à l'autre par l'intermédiaire d'un manchon (36).

6. Dispositif selon l'une des revendications précédentes, caractérisé par le fait que la plaque de fixation (16) présente, sur ses bords latéraux (12, 14), des nervures (42, 44) s'engageant intimement dans les rails en U (8, 10).

# FIG.1

# FIG.2

# FIG.3

# FIG.4

# FIG.5

0 137 520